# EUROPÄISCHE PATENTANMELDUNG

(11) **EP 3 059 072 A2**
(43) Veröffentlichungstag der Anmeldung: **24.08.2016**
(21) Anmeldenummer: 16000392.7
(22) Anmeldetag: 17.02.2016
(51) Int. Cl.: B29C 63/02

(54) **ANLAGE UND VERFAHREN ZUM AUFKASCHIEREN EINER KASCHIERFOLIE AUF EINEN TRÄGERTEILESATZ**

(30) Priorität: 17.02.2015 DE 102015001843; 17.02.2015 DE 102015001842
(71) Anmelder: Kiefel GmbH, 83395 Freilassing (DE)
(72) Erfinder: Schnugg, Johann, DE - 83410 Laufen, Bayern (DE)
(74) Vertreter: Farago, Peter Andreas

(57) **Zusammenfassung**

Die Erfindung betrifft eine Anlage und ein Verfahren zum Kaschieren von Trägerteilen mit Folien zum Bereitstellen von Innenverkleidungsteilen für ein Kraftfahrzeug. Insbesondere beschäftigt sich die Erfindung mit einem System, welches einen sehr wirtschaftlichen, schnellen Wechsel zwischen zwei unterschiedlichen Fahrzeugen erlaubt.

Die Erfindung sieht mit kurzen Worten einen Rotationsobertisch mit vier daran angeordneten Oberwerkzeugen eines Werkzeugsatzes vor, wobei in einem Schienensystem zwei weitere Sets von jeweils vier Oberwerkzeugen eines Werkzeugsatzes für ein Kraftfahrzeug vorgehalten werden. Über elektromotorische Antriebe können innerhalb des Schienensystems bei einem in der Höhe verstellbaren Rotationsobertisch extrem schnelle Umrüstvorgänge ermöglicht werden.

## Beschreibung

Die Erfindung betrifft eine Anlage und ein Verfahren zum Aufkaschieren einer Kaschierfolie auf einen Trägerteilesatz, und zwar zum Herstellen eines Innenverkleidungsteilesatzes für ein Kraftfahrzeug mittels eines Werkzeugsatzes.

Kaschieranlagen für Innenverkleidungsteile für Kraftfahrzeuge sind im Stand der Technik bekannt. So offenbart die DE 100 22 269 A1 ein Verfahren und eine Vorrichtung zum Durchführen eines Produktwechsels bei Thermoformvorgängen, wobei eine Werkzeugwechselvorrichtung für das Unterwerkzeug einen Hubtisch aufweist, der zwischen einem Niveau unterhalb der Wechselvorrichtung und der Folienebene verfahrbar ist und wobei zusätzlich eine Oberwerkzeugwechselvorrichtung vorgesehen ist, die einen Revolver mit einer horizontalen Schaltachse aufweist.

Der hier vorliegenden Erfindung liegt die Aufgabe zugrunde, dem Stand der Technik eine Verbesserung oder eine Alternative zur Verfügung zu stellen.

Nach einem die Anlage in den Vordergrund stellenden ersten Aspekt der Erfindung löst diese Aufgabe eine Anlage zum Aufkaschieren einer Kaschierfolie auf einen Trägerteilsatz zum Herstellen eines Innenverkleidungsteilesatzes für ein Kraftfahrzeug mittels eines Werkzeugsatzes, wobei die Anlage eine Hubtischeinrichtung mit einem Oberjoch und einem Unterjoch aufweist, wobei das Oberjoch und das Unterjoch dazu eingerichtet sind, jeweils ein Oberwerkzeug beziehungsweise ein Unterwerkzeug zur Benutzung aufzunehmen, also zum Zusammenfahren gegeneinander, wobei ein Werkzeugsatz zwei Unterwerkzeuge und vier Oberwerkzeuge umfasst, nämlich als Unterwerkzeuge zwei unterschiedliche Aufnahmeunterwerkzeuge zum Aufnehmen der Trägerteile sowie als Oberwerkzeuge einerseits zwei unterschiedliche Kaschierhilfeoberwerkzeuge zum kaschierenden Zusammenwirken mit den Aufnahmeunterwerkzeugen und andererseits zwei unterschiedliche Trennoberwerkzeuge, wobei die Anlage zur Aufnahme, also zum Benutzen beziehungsweise Vorhalten und wahlweisen Wechseln, von mindestens zwei Werkzeugsätzen eingerichtet ist, wobei am Oberjoch eine Werkzeugschalteinrichtung vorgesehen ist, welche die zwei Kaschierhilfeoberwerkzeuge und die zwei Trennoberwerkzeuge eines Werkzeugsatzes montiert haltend und wahlweise jedes dieser vier Oberwerkzeuge in eine Arbeitsposition und die anderen drei Oberwerkzeuge währenddessen in drei Nebenschaltpositionen zu schalten eingerichtet ist, wobei am Oberjoch zusätzlich sowie auch am Unterjoch jeweils eine Werkzeugsatz-Wechseleinrichtung vorgesehen ist, um einen gerade benutzten Werkzeugsatz gegen einen vorgehaltenen Werkzeugsatz auszutauschen, wobei sich die Anlage dadurch kennzeichnet, dass die obere Werkzeugsatz-Wechseleinrichtung mit einem Schienensystem und einem Antrieb in Wirkverbindung steht und dazu eingerichtet ist, zum Wechseln des Werkzeugsatzes die vier benutzten Oberwerkzeuge eines benutzten Werkzeugsatzes auf das Schienensystem abzulegen und im Austausch vier vorgehaltene Oberwerkzeuge eines vorgehaltenen Werkzeugsatzes vom Schienensystem aufzunehmen.

Mit einfachen Worten soll die Anlage also dazu eingerichtet sein, einen Werkzeugsatz gegen einen anderen Werkzeugsatz auszutauschen, also beispielsweise dann, wenn auf der Anlage ein anderes Kraftfahrzeugmodell produziert werden soll. Denn dann ändern sich die vier Türen, und eine gattungsgemäße Anlage wird vor allem zum Produzieren von Gegenverkleidungselementen für Türen verwendet. Deshalb umfasst ein Trägerteilesatz im Allgemeinen genau vier Trägerteile, nämlich ein Trägerteil an der vorderen linken Tür, ein Trägerteil an der vorderen rechten Tür, ein Trägerteil an der hinteren linken Tür und ein Trägerteil an der hinteren rechten Tür. Für den Fall, dass ein Kraftfahrzeug mit nur zwei Türen oder mit sechs Türen produziert werden soll, kann die Anzahl der Trägerteile, die zu kaschieren sind, abweichen. Im Regelfall wird aber auch dann jeweils paarweise eine zumindest weitgehende Symmetrie zwischen den Trägerteilen eines Trägerteilesatzes herrschen.

Dasselbe gilt für die vorzunehmende Aufkaschierung. Jedes Trägerteil soll mit einem Folienelement kaschiert werden.

Die aufzukaschierenden Folien können beispielsweise eine Ledernarbung aufweisen, wobei diese bereits vorher oder während des Aufkaschierens entstehen kann, je nachdem, für welches konstruktive Verfahren zum Aufbringen einer etwaigen Musterung wie einer Narbung sich der Fachmann entscheidet.

In einem Arbeitstakt fahren ein Oberwerkzeug und ein Unterwerkzeug gegeneinander und thermoformen dabei die Kaschierung über das Trägerteil. Im Normalfall, allerdings nicht zwingend, ist ein Oberwerkezug jeweils für eine Kaschierung vorgesehen, und ein Unterwerkzeug jeweils für ein Trägerteil. Durch Umschalten der Ober- und der zugehörigen Unterwerkzeuge werden mit vier Arbeitstakten die Kaschierungen auf einem Trägerteilesatz zum Herstellen eines Innenverkleidungsteilesatzes vorgenommen.

Durch den aus dem Stand der Technik bereits bekannten Werkzeugrevolver mit der horizontalen Schaltachse am Oberjoch ist die Anlage in der Lage, alle vier Oberwerkzeuge eines Werkzeugsatzes, somit also zum Herstellen eines Innenverkleidungsteilesatzes, ohne Umspannen von Werkzeugen zu tragen. Solange also die Produktion für ein Kraftfahrzeug-Modell läuft, kann die Anlage ohne das Erfordernis von Umspannungen am Oberjoch durchproduzieren. Eine geeignete Werkzeugwechselvorrichtung am Unterjoch sorgt gleichzeitig dafür, dass immer das passende Unterwerkzeug dem gerade jeweils in die Arbeitsposition geschalteten Oberwerkzeug gegenüber gestellt wird. Bislang ist es aus dem Stand der Technik beispielsweise bekannt, dort einen Drehtisch mit einer vertikalen Schaltachse vorzusehen. Auch andere Werkzeugeinwechselvorrichtungen am Unterjoch sind aber ohne Weiteres denkbar. Die hier vorgestellte Erfindung bezieht sich vor allem auf die Funktionsweise am Oberjoch.

Die Werkzeugsatz-Wechseleinrichtung wird in den meisten Fällen als eine Fahrzeugmodell-Wechseleinrichtung betrieben werden, nämlich genau dann, wenn ein Werkzeugsatz genau für ein Fahrzeugmodell vorgesehen ist.

Der "vorgehaltene Werkzeugsatz" soll ein solcher Werkzeugsatz sein, der hierzu nicht etwa manuell eingewechselt werden muss, sondern der in der Anlage gespeichert bleibt, also vorbehalten, so dass die Anlage selbsttätig den Wechsel zwischen dem gerade in Betrieb befindlichen Werkzeugsatz und dem vorgehaltenen Werkzeugsatz vornehmen kann.

Das "Schienensystem" sei so zu verstehen, dass eine geführte Transportmechanik vorliegt. Die Oberwerkzeuge sind schwer. Es macht deshalb Sinn, sie auf einer Führung abzusetzen und auch darauf zu bewegen. Dies sei eine besonders bevorzugte Ausführungsform eines Schienensystems. Insbesondere sei an eine geradlinige Schienenführung gedacht.

Der Patentanspruchswortlaut spricht deshalb auch von einem "Ablegen" der Oberwerkzeuge auf das Schienensystem. Es versteht sich, dass gleich oder ähnlich wirkende Maßnahmen wie zum Beispiel das Einhängen in ein Schienensystem vom Fachmann hier mitgelesen werden.

Besonderheit des Schienensystems am Oberjoch soll jedoch sein, dass es einerseits Raum bietet, um den just auszuwechselnden Werkzeugsatz aufzunehmen, gleichzeitig aber schon den einzuwechselnden Werkzeugsatz zum Einwechseln vorzuhalten.

Dies kann durch ein sehr großes Schienensystem bewerkstelligt sein, bevorzugt aber dadurch, dass der zur Verfügung stehende Raum geschickt genutzt wird und beispielsweise nicht alle vier Oberwerkzeuge zunächst aus- und dann die vier neuen Oberwerkzeuge eingewechselt werden, sondern dass zunächst nur ein Teil der Oberwerkzeuge aus- und dafür ein entsprechender Teil der einzuwechselnden Oberwerkzeuge eingewechselt wird, wobei das Verfahren mehrstufig erfolgt, bis die Werkzeuge komplett ausgetauscht sind.

Das vorgeschlagene System ermöglicht einen besonders schnellen Wechsel der Oberwerkzeuge und somit eine besonders schnelle Umstellung der Anlage. Der Prototyp der Anmelderin kann einen vollständigen Werkzeugwechsel in weniger als sechs Minuten vornehmen, und während der Produktion eines Kraftfahrzeugmodells muss kein Wechsel erfolgen, so dass innerhalb eines Fahrzeugmodells extrem schnell produziert werden kann.

Es wurde bereits erwähnt, dass die Anlage am Oberwerkzeug bevorzugt einen Revolver aufweist, wobei dieser Revolver bevorzugt dazu eingerichtet ist, alle vier Oberwerkzeuge eines Werkzeugsatzes montiert zu halten und zu schalten eingerichtet ist.

Bei einer solchen Ausgestaltung, die aus dem Stand der Technik bekannt ist, entfällt vollständig der Werkzeugwechsel innerhalb der Produktion eines Fahrzeugmodells.

Unabhängig davon, ob der Revolver alle Oberwerkzeuge eines Werkzeugsatzes aufnehmen kann, scheint es vorteilhaft zu sein, wenn ein Revolver mit einer horizontalen Schaltachse vorgesehen ist.

Die horizontale Schaltachse ermöglicht einen Schaltweg, der in der erforderlichen Bauhöhe eher gering ist. Dennoch ist es möglich, seitlich des Schaltkreises das Schienensystem vorzusehen. Eine solche Anlage kann also besonders kompakt bauen.

Bevorzugt weist die Werkzeugsatz-Wechseleinrichtung am Oberjoch einen Schlitten auf.

Ein Schlitten sollte dazu eingerichtet sein, ein Werkzeug aufzunehmen. Eine besondere Form eines Schlittens kann sich dadurch auszeichnen, dass ein Schlitten dazu eingerichtet ist, zwei Werkzeuge aufzunehmen, insbesondere übereinandergestapelt. Hierzu kann eine Zwischenebene am Schlitten vorgesehen sein, damit die beiden Oberwerkzeuge nicht direkt aufeinander stehen, sondern diese durch die Zwischenebene voneinander getrennt werden.

Ein Schlitten ist bevorzugt angetrieben, so kann er einen eigenen Antrieb aufweisen, der dann von der Werkzeugsatz-Wechseleinrichtung angesteuert werden können muss; oder die Werkzeugsatz-Wechseleinrichtung verfügt über einen externen Antrieb und kann den Schlitten mit dem Antrieb koppeln.

Durch den Schlitten ist es besonders leicht möglich, ein oder mehrere Oberwerkzeuge entlang des Schienensystems zu transportieren.

Ein Schlitten kann insbesondere gleitend oder rollend im Schienensystem geführt sein.

Wenn der Schlitten parallel zum Schienensystem verfahrbar gelagert ist, ist es besonders leicht, die Oberwerkzeuge in eine Arbeits- und/oder Wechselposition beziehungsweise in eine Parkposition zu verfahren.

Der Schlitten kann außerdem senkrecht zum Schienensystem verfahrbar sein, insbesondere in der Höhe verfahrbar sein, wenn das Schienensystem horizontal verläuft. Auch ein seitliches Auslenken aus der Schiene ist denkbar.

Eine besonders bevorzugte Ausführungsform der erfindungsgemäßen Anlage sieht vor, dass sich das Schienensystem zu zwei Seiten der Werkzeugschalteinrichtung am Oberjoch erstreckt und dort jeweils eine Schienenstrecke aufweist.

Bei einer Anordnung, bei welcher sich das Schienensystem gegenüber der Werkzeugschalteinrichtung so erstreckt, kann eine Positionierung von Oberwerkzeugen so erfolgen, dass ein zu einer ersten Seite von der Werkzeugschalteinrichtung entfernt geparktes Werkzeug auf der anderen Seite der Werkzeugschalteinrichtung ebenfalls ein Werkzeug vorfindet, so dass sich die Gewichtskräfte der beiden geparkten Werkzeuge zumindest zum Teil ausgleichen. Gegenüber einer nur einseitig der Werkzeugschalteinrichtung geparkten vollständigen Anzahl an Werkzeugen, nämlich eines gesamten Werkzeugsatzes, wird dadurch eine verbiegende Belastung auf die Maschine vermieden, insbesondere auf die Jochstützen.

Eine möglichst geschickte Steuerung kann zumindest in etwa gleich viele Werkzeuge auf jeder Seite der Werkzeugschalteinrichtung auf der jeweils dort zu findenden Schienenstrecke parken.

Es wird vorgeschlagen, dass die Werkzeugsatz-Wechseleinrichtung am Oberjoch einen aus einem Schienensystemtransferraum heraus verfahrbar gelagerten Schlitten aufweist, wobei der Schienensystemtransferraum zwischen zwei Schienenstrecken liegen kann.

Der "Schienensystemtransferraum" ist ein Arbeitsraum, in welchen hinein die Werkzeugschalteinrichtung greifen kann, so dass sie in diesen Transferraum sowohl ein Werkzeug einlegen als auch ein Werkzeug aus diesem Transferraum herausnehmen kann.

Gleichfalls muss der Schlitten dazu eingerichtet sein, aus dem Schienensystem in den Transferraum hinein ein Werkzeug zu verfahren, ebenso wie aus diesem Transferraum heraus in das Schienensystem hinein zu verfahren.

Der Schienensystemtransferraum kann mit einer Schiene ausgestattet sein. Es ist aber auch denkbar, dass eine Transfereinrichtung den Schlitten und/oder das Werkzeug im Transferraum hält.

Die bevorzugte Ausführungsform sieht vor, dass sich der Schienensystemtransferraum direkt unterhalb des Oberwerkzeug-Revolvers befindet, während sich ein Schienensystem zu beiden Seiten des Transferraums erstreckt, also eine erste Schienenstrecke auf einer ersten Seite des Transferraums und eine zweite Schienenstrecke auf der genau gegenüberliegenden zweiten Seite des Transferraums vorgesehen sind. Auf den beiden Schienenstrecken gelagerte Werkzeuge gleichen sich dadurch in ihren Biegemomenten um den Transferraum herum aus. Wenn der Transferraum direkt unter dem Oberwerkzeug-Revolver angeordnet ist, gleichen sich dadurch auch die Gegenmomente um den Revolver herum aus. Dies ermöglicht eine besonders präzise Fertigung.

Zudem lassen sich die beiden Schienenstrecken dazu nutzen, die Werkzeuge geschickt auszuwechseln, also mit möglichst wenig Fahrbewegungen der Werkzeuge den kompletten Wechsel eines Werkzeugsatzes vorzunehmen.

Eine platzsparende Anordnung am Oberjoch ergibt sich dann, wenn die WerkzeugsatzWechseleinrichtung am Oberjoch dazu eingerichtet ist, zwei Oberwerkzeuge eines Satzes Werkzeuge übereinander zu stapeln und gestapelt in das Schienensystem zu geben.

Diesbezüglich sei darauf hingewiesen, dass auch mehr als zwei Oberwerkzeuge übereinander stapelbar sein können, beispielsweise auch drei oder alle vier Oberwerkzeuge eines Werkzeugsatzes.

Hinsichtlich einer möglichst geschickten Ausnutzung von Raum am Oberjoch sieht eine vorteilhafte Ausführungsform der Anmelderin vor, dass die Werkzeugschalteinrichtung, vor allem ein Revolver, genau vier Benutzungsplätze für mittels Schalten benutzbare Oberwerkzeuge, das Schienensystem genau vier Parkplätze zum Vorhalten von genau acht Oberwerkzeugen und genau einen zusätzlichen Parkplatz zum Ablegen eines auszuwechselnden benutzten Oberwerkzeugs oder Oberwerkzeugpaares aufweisen.

Eine mögliche Nutzung für diesen Aufbau wird nachfolgend bei der Beschreibung des Verfahrens erläutert.

Eine gattungsgemäße Anlage hat eine Bedienerseite und eine Rückseite. Die Bedienerseite zeichnet sich dadurch aus, dass das Bedienpult dort angeordnet ist, meist mehrere Tasten und zumindest einen Bildschirm aufweisend, bevorzugt einen Touchscreen.

Es wird vorgeschlagen, dass auf der Bedienerseite der Anlage mehr Schienenstrecke vorgesehen ist als auf einer Rückseite der Anlage.

Bezugspunkt für diesen Vergleich sei jeweils die Achse der Werkzeugschalteinrichtung, also beispielsweise des Revolvers am Oberjoch.

Bei einer solchen Konstellation kann sich die Schiene mit möglichst vielen sichtbaren Werkzeugen oberhalb des für den Bedieners vorgesehenen Raums an der Bedienerseite erstrecken. Der Bediener hat dann die Werkzeuge auf ihren Parkpositionen im Blick.

Auf der Rückseite kann vor allem eine Möglichkeit vorgesehen sein, neue vorzuhaltende Werkzeuge eines neuen vorzuhaltenden Werkzeugsatzes in das Schienensystem einzubringen. Um dort genug Platz zum Agieren zu haben, beispielsweise für einen Krahn oder einen Hublader, macht es Sinn, wenn auf der Rückseite der Anlage das Schienensystem kürzer baut.

Die Schienenstrecke kann einen Antrieb aufweisen, der auf die gesamte Länger der Schienenstrecke oder der Schienenteilstrecke wirkt.

Bevorzugt sind bei zwei Teilstrecken im Schienensystem mindestens zwei Antriebe vorhanden, so dass Bewegungen auf beiden Seiten der Werkzeugwechseleinrichtung gleichzeitig oder zumindest teilweise zeitlich überlappend durchgeführt werden können.

Wenn das Schienensystem eine Teleskopschiene aufweist, dann ist es besonders leicht möglich, die Schienen aus den Parkplätzen für die Oberwerkzeuge in den Transferraum hinein zu erstrecken und die Schienen dann während der Betriebszeit der Anlage wieder aus dem Transferraum, der auch der Arbeitsraum sein kann, zu entfernen.

Am Unterjoch ist bevorzugt eine Unterwerkzeugschalteinrichtung für die zu benutzenden Unterwerkzeuge eines Werkzeugsatzes vorgesehen.

Die bevorzugte Ausführungsform sieht einen Unterwerkzeugdrehtisch vor.

Der Unterwerkzeugdrehtisch kann eine vertikale Schaltachse aufweisen.

Alternativ oder kumulativ ist denkbar, dass die Unterwerkzeugwechseleinrichtung oder eine Unterwerkzeugschalteinrichtung über ein Schlittensystem wie beispielsweise mit Teleskopladen in einer oder zwei Ebenen arbeitet.

Teleskopladen haben den Vorteil, dass sie in einer Höhe bleiben, während sie bewegt werden. Die Bewegung ist dabei besonders leicht, weil geradlinig. Dies macht die Bewegung für den Benutzer gut vorhersehbar, was die Anlage sicher bauen lässt.

Bevorzugt steht die Werkzeugsatz-Wechseleinrichtung am Unterjoch mit einem oder bevorzugt zwei Stapelmagazinen in Wirkverbindung, wobei vorgehaltene einzuwechselnde Unterwerkzeuge im Stapelmagazin vorgehalten werden können und wobei benutzte und auszuwechselnde Unterwerkzeuge in das Stapelmagazin hinein geparkt werden können.

Hierzu können die Teleskopschubladen dienen.

So kann ein Stapelmagazin aus einer Mehrzahl von Teleskopschubladen bestehen oder jedenfalls eine Teleskopschublade aufweisen.

Nach einem zweiten Aspekt der vorliegenden Erfindung löst die gestellte Aufgabe ein Verfahren zum Wechseln eines Werkzeugsatzes an einer Anlage zum Aufkaschieren einer Kaschierfolie auf einem Trägerteilesatz zum Herstellen eines Innenverkleidungsteilesatzes für ein Kraftfahrzeug mittels des Werkzeugsatzes, wobei die Anlage eine Hubtischeinrichtung und einen Oberjoch und einen Unterjoch aufweist, wobei das Oberjoch und das Unterjoch dazu eingerichtet sind, jeweils ein Oberwerkzeug beziehungsweise ein Unterwerkzeug zur Benutzung aufzunehmen, also zum Zusammenfahren gegeneinander, wobei ein Werkzeugsatz zwei Unterwerkzeuge und vier Oberwerkzeuge umfasst, nämlich als Unterwerkzeuge zwei unterschiedliche Aufnahmeunterwerkzeuge zum Aufnehmen der Trägerteile sowie als Oberwerkzeuge einerseits zwei unterschiedliche Kaschierhilfeoberwerkzeuge zum kaschierenden Zusammenwirken mit den Aufnahmeunterwerkzeugen und andererseits zwei unterschiedliche Trennoberwerkzeuge, wobei die Anlage zur Aufnahme, also zum Benutzen beziehungsweise Vorhalten und wahlweisen Wechseln, von mindestens zwei Werkzeugsätzen eingerichtet ist, wobei am Oberjoch eine Werkzeugschalteinrichtung vorgesehen ist, welche die zwei Kaschierhilfeoberwerkzeuge und die zwei Trennoberwerkzeuge eines Werkzeugsatzes montiert haltend und wahlweise jedes dieser vier Oberwerkzeuge in eine Arbeitsposition und die anderen drei Oberwerkzeuge dabei in drei Nebenschaltpositionen zu schalten eingerichtet ist, wobei am Oberjoch zusätzlich sowie auch am Unterjoch jeweils eine Werkzeugsatz-Wechseleinrichtung vorgesehen ist, um einen gerade benutzten Werkzeugsatz gegen einen vorgehaltenen Werkzeugsatz auszutauschen, wobei zunächst ein benutztes Oberwerkzeug von der Schalteinrichtung am Oberjoch auf einen freien Parkplatz in ein Schienensystem abgelegt wird, danach die Oberwerkzeuge im Schienensystem verfahren werden und danach ein anderes Oberwerkzeug in die Werkzeugschalteinrichtung am Oberjoch übernommen wird.

Es wurde vorstehend bereits erläutert, dass nach der hier vorgestellten Erfindung es sehr vorteilhaft ist, der Schalteinrichtung am Oberjoch ein Schienensystem zur Verfügung zu stellen. Mit dem Schienensystem können die Oberwerkzeuge platz- und zeitsparend gewechselt werden. Zudem können während der Produktion eines Kraftfahrzeugmodells die Werkzeuge eines Werkzeugsatzes vollständig in der Schalteinrichtung am Oberjoch aufgenommen sein, so dass sich ein Umspannen der Oberwerkzeuge während der Produktion eines Kraftfahrzeugmodells erübrigt.

Es wird vorgeschlagen, dass als vorbereitender Schritt die Schalteinrichtung verfahren wird, insbesondere in ihrer Höhe verstellt wird.

Bei einer solchen Konstruktion lässt sich vor allem vorstellen, dass die Schalteinrichtung eine Ruheposition oder Arbeitsposition einnimmt, welche höher liegt als eine Werkzeugwechselposition. Die Schiene liegt dann also niedriger als die Arbeits- oder Ruheposition der Werkzeugschalteinrichtung am Oberjoch.

Wenn das Schienensystem niedriger liegt, dann ist auch die erforderliche Arbeitshöhe zum Bestücken des Schienensystems mit neuen, einzuwechselnden Oberwerkzeugen geringer, was die Arbeitssicherheit erhöht. Außerdem lassen sich die Werkzeuge leichter vom Bediener optisch inspizieren, ohne aus dem Schienensystem entfernt werden zu müssen.

Wenn Oberwerkzeuge entlang des Schienensystems verfahren werden, um der Werkzeugsatz-Wechseleinrichtung Zugriff auf einen freien Parkplatz zu ermöglichen, dann kann das Schienensystem bei geschickter Ausnutzung der Verfahrrichtungen recht kurz bauen.

Insbesondere sei daran gedacht, nicht immer sämtliche Oberwerkzeuge eines Werkzeugsatzes zu verfahren, sondern diese einzeln oder beispielsweise zu zweit aufeinander gestapelt und bevorzugt auf Schlitten so zu verfahren, dass der zur Verfügung stehende (Park-)Platz bestmöglich ausgenutzt wird. Eine Optimierung kann wahlweise hinsichtlich des zeitlichen oder des erforderlichen räumlichen Aspekts beim Wechsel eines Oberwerkzeugsatzes erfolgen.

Bevorzugt wird ein benutztes Oberwerkzeug in das Schienensystem bewegt, und zwar auf den freien Parkplatz.

Der guten Ordnung halber sei darauf hingewiesen, dass bei einer verschlechterten Ausführungsform auch das Schienensystem bewegt werden kann. Dabei können die dort vorgehaltenen oder abgelegten und damit ebenfalls wieder vorgehaltenen Oberwerkzeuge entweder mit dem Schienensystem mitbewegt werden, was aber zu einer hohen trägen Masse bei der Bewegung führt; oder die dort liegenden Werkzeuge können über einen bevorzugt jeweils individuellen Antrieb gegen die Schienenbewegungsrichtung verfahren werden, zumindest teilweise, so dass die Werkzeuge während der Bewegung der Schiene zumindest im Wesentlichen ortsfest bleiben.

Ein System mit einer angetriebenen Schiene kann auch ergänzend zu einem System mit einem oder mehreren angetriebenen Schlitten Verwendung finden.

Um das Schienensystem kürzer dauern lassen zu können, wird vorgeschlagen, dass zwei Oberwerkzeuge gestapelt auf das Schienensystem gelegt werden.

Das kann bevorzugt so geschehen, dass zwei Oberwerkzeuge auf den freien Parkplatz gelegt werden, nämlich bevorzugt ein Kaschierhilfeoberwerkzeug und ein bevorzugt das zugehörige, also und, bevorzugt das zugehörige, Trennoberwerkzeug.

Wenn zwei Oberwerkzeuge gestapelt auf das Schienensystem gelegt werden, dann sind die vier Oberwerkzeuge eines Werkzeugsatzes in zwei Positionen verstaubar. Es muss also entlang des Schienensystems dann nur zwei Verfahrschritte geben, um die vier Oberwerkzeuge aus der Werkzeug-Schalteinrichtung abzulegen oder zu neuen aufzunehmen. Es kann allerdings auch sinnvoll sein, mit mehr Verfahrschritten zu arbeiten, beispielsweise dann, wenn nicht zunächst alle vier Oberwerkzeuge aus der Werkzeug-Schalteinrichtung am Oberjoch abgelegt und erst dann die vier einzuwechselnden neuen Werkzeuge eingewechselt werden sollen, sondern das Verfahren mehrstufig arbeitet, also zunächst nur ein Teil, vor allem zwei, Oberwerkzeuge abgelegt werden, dann auf die beiden frei gewordenen Plätze die zwei einzuwechselnden Oberwerkzeuge eingewechselt werden, woraufhin erst danach die zwei verbleibenden Werkzeuge am Oberjoch ausgetauscht werden.

Selbst das Ablegen von zwei Werkzeugen am Oberjoch aus der Werkzeug-Schalteinrichtung kann noch weiter aufgelöst werden, und zwar dahingehend, dass beispielsweise zunächst nur ein Oberwerkzeug abgelegt und dafür sogleich die freie Position mit einem neuen einzuwechselnden Oberwerkzeug geführt wird. Dies würde es ermöglichen, zwischen dem Ablegen eines Oberwerkzeugs und dem Einfügen des neu einzuwechselnden Oberwerkzeugs die Werkzeug-Schalteinrichtung am Oberjoch nicht schalten zu müssen. Im Allgemeinen wird es jedoch so sein, dass das Schalten der Werkzeug-Schalteinrichtung am Oberjoch um die Schaltachse herum schneller sein wird als das Verfahren von Werkzeugen entlang des Schienensystems.

Der Fachmann ist in der Lage, das vorgeschlagene System auf seine konkreten Bedürfnisse anzupassen, also insbesondere die Anlage danach zu konstruieren, ob eher der erforderliche Bauraum minimiert oder die erforderliche Umrüstzeit zum Wechsel eines Werkzeugsatzes für einen Kraftfahrzeug-Modellwechsel minimiert werden sollen.

Wenn sich der freie Parkplatz neben dem Transferraum direkt unterhalb der Werkzeug-Schalteinrichtung am Oberjoch befindet, dann wird vorgeschlagen, dass das Legen des Oberwerkzeugs auf den freien Parkplatz dadurch erfolgt, dass das Oberwerkzeug zunächst von der Werkzeugschalteinrichtung abgedockt wird und dann seitlich auf den freien Parkplatz verschoben wird.

Hinsichtlich des Aufnehmens des einzuwechselnden Oberwerkzeugs in die Schalteinrichtung wird vorgeschlagen, dass dies dadurch erfolgt, dass das einzuwechselnde Oberwerkzeug zunächst innerhalb des Schienensystems in eine Position zum Andocken verfahren wird und dann an die Schalteinrichtung angedockt wird, wobei das einzuwechselnde Oberwerkzeug und/oder die Werkzeug-Schalteinrichtung in ihrer Höhe verfahren werden können.

Die Prototypenanlage des Erfinders ist dazu eingerichtet, einen kompletten Werkzeugsatz mit vier Oberwerkzeugen zweistufig auszuwechseln und danach einen Produktionsbetrieb mit den neu eingewechselten Werkzeugen durchzuführen.

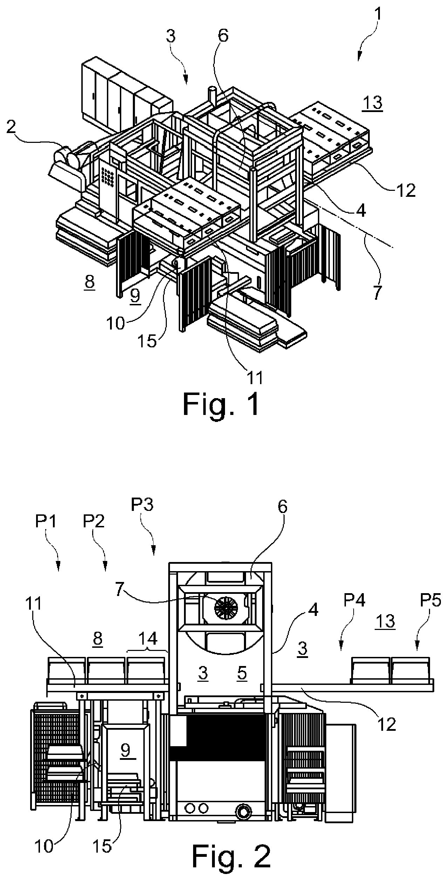

Die Erfindung wird nachstehend anhand eines Ausführungsbeispiels unter Bezugnahme auf die Zeichnung näher erläutert. In der Zeichnung zeigen
- Figur 1: schematisch in einer räumlichen Ansicht eine erfindungsgemäß ausgerüstete Anlage,
- Figur 2: die Anlage aus Figur 1 in einer schematischen seitlichen Ansicht,

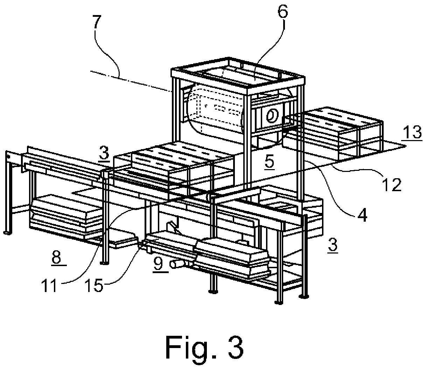

- Figur 3: die Maschine aus den Figuren 1 und 2 in vereinfachter räumlicher Darstellung,
- Figur 4a: den Beginn einer Werkzeugsatz-Wechsel-Sequenz,
- Figuren 4b bis g: die weiteren Schritte der Werkzeugsatz-Wechsel-Sequenz.

Die Anlage 1 in den Figuren ist dazu eingerichtet, Trägerteile für die Innenverkleidungen von Kraftfahrzeugen mit Folien zu kaschieren. Je nach Gestaltung können die Folien beispielsweise mit einer Ledernarbung versehen sein oder versehen werden.

Die Folie dazu wird auf einer Kaule 2 eingangsseitig der Anlage 1 bereitgestellt. Die Anlage 1 dazu eingerichtet, die Folie von der Kaule 2 in einen Schutzbereich 3 zu transportieren. Dort kann sie von einem Ober-/Unterwerkzeug verarbeitet werden.

Im Schutzbereich 3 befindet sich an einem Maschinengestell 4 eine elektromechanische Einrichtung zum Betreiben der Anlage 1 mit verschiedenen Werkzeugen, zum Durchschalten der Werkzeuge und zum Auswechseln von Werkzeugsätzen:

Ein Werkzeugsatz beinhaltet in der hier vorgestellten Ausführungsform vier Oberwerkzeuge und zwei Unterwerkzeuge. Der Fachmann wird die vorgestellte Anlage entsprechend modifizieren, falls in einem Produktionsauftrag, für welchen er die Anlage entwerfen soll, beispielsweise mehr oder weniger Werkzeuge verwendet werden sollen.

Zum Kaschieren werden ein Ober- und ein Unterwerkzeug zusammengefahren. Dies geschieht in einem Arbeitsraum 5.

In den Arbeitsraum 5 kann von oben ein Oberwerkzeug-Revolver 6 eingreifen.

Der Oberwerkzeug-Revolver 6 ist mit den vier Oberwerkzeugen eines Werkzeugsatzes bestückbar. Durch Schalten des Oberwerkzeug-Revolvers 6 um seine Schaltachse 7 lassen sich die Oberwerkzeuge vom Oberwerkzeug-Revolver 6 jeweils einzeln zum Arbeitsraum 5 hin orientieren, also zum zugehörigen Unterwerkzeug.

Die vier Oberwerkzeuge eines Werkzeugsatzes bestehen aus zwei Formoberwerkzeugen und zwei Stanzoberwerkzeugen.

Der Oberwerkzeug-Revolver 6 ist in der Höhe innerhalb des Maschinengestells 4 verfahrbar.

Zu einer Bedienseite 8 der Anlage 1 hin erstreckt sich oberhalb eines Bedienerraums 9 für einen Bediener 10 eine erste Schiene 11, welche sich über die Erstreckung des Arbeitsraums 5 unterbrochen in einer zweiten Schiene 12 auf einer Werkzeugwechselseite 13 fortsetzt.

Die erste Schiene 11 ist in ihrer Länge für die Länge von drei Werkzeuglängen 14 (exemplarisch beziffert, wobei im dargestellten Beispiel der Einfachheit halber alle Werkzeuge gleich lang sind) ausgelegt. Es lassen sich somit drei Werkzeuge oder Werkzeugstapel auf der ersten Schiene 11 auf der Bedienseite 8 der Anlage 1 positionieren oder parken.

Zur Werkzeugwechselseite 13 hin erstreckt sich die zweite Schiene 12 länger vom nach oben ragenden Maschinengestell 4 fort. Die Länge sollte jedoch auch mindestens drei Werkzeuglängen 14 betragen.

Die in den Figuren gezeigte Anlage 1 ist mit ihrer Steuerung (nicht dargestellt) so aufgebaut, dass jeweils zwei Oberwerkzeuge aus einem gemeinsamen Werkzeugsatz übereinander abgelegt werden.

Auf der Bedienseite 8 ist ein gemeinsamer elektromotorischer Antrieb für drei Oberwerkzeugsätze vorgesehen.

Zudem ist ein gemeinsamer elektromotorischer Antrieb auf der Werkzeugwechselseite 13 für zwei Oberwerkzeugsätze vorgesehen.

Für jeden Parkplatz sind vier pneumatisch angetriebene Werkzeugablagekonen vorgesehen.

In der dargestellten Ausführungsform ist vorgesehen, dass die Parkplatzpositionen P1, P2, P3 beziehungsweise P4, P5 jeweils ca. 550 mm pneumatischen Verschiebeweg voneinander angeordnet sind. Selbstverständlich kann dies vom Fachmann ohne Weiteres der von ihm zu dimensionierenden Anlage angepasst werden.

Die als Führungsschiene für den Transport der Oberwerkzeuge dienenden erste Schiene 11 und zweite Schiene 12 bilden gemeinsam eine Führungsschiene (keine eigene Bezifferung), wobei aus der ersten Schiene 11, aus der zweiten Schiene 12 oder aus beiden Schienenstücke (nicht dargestellt) teleskopartig ausfahrbar sind, so dass die dadurch resultierende Führungsschiene im Idealfall sogar den Arbeitsraum 5 vollständig schließend überbrücken kann.

Im unteren Bereich des Maschinengestells 4 befindet sich ein vakuumdichter Vorblaskasten.

Der Bediener 10 kann die zu kaschierenden Trägerteile auf üblicher Arbeitshöhe, beispielsweise auf Oberschenkelhöhe, Hüfthöhe oder Bauchhöhe, einlegen. Ihm steht hierzu ein Tisch 15 zur Verfügung.

Unterwerkzeuge mit und ohne Spannrahmen werden beidseitig des Bedienerraums 9 der Anlage 1 geparkt (Parkplätze nicht einzeln nummeriert). Die Ablage der Unterwerkzeuge kann beispielsweise in Teleskopschubladen in mehreren Ebenen (hier dargestellt: zwei Ebenen) erfolgen.

Vor und unterhalb des Speichers befindet sich eine Zwischenablagestation.

Die Schubladen werden pneumatisch aus- und eingefahren.

Ein Transfer der Werkzeuge erfolgt über ein motorisch gesteuertes Bedienshuttle.

Die Anlage 1 ist dazu in der Lage, mit nur besonders kurzen Stillstandzeiten der Automobilproduktion zuzuarbeiten:

Zunächst ist dafür eine Grundbestückung der Anlage 1 erforderlich. Diese wird wie aus dem Stand der Technik bekannt über Werkzeugwechselwagen von der Werkzeugwechselseite 13 aus vorgenommen: Die Bestückung oben erfolgt über einen Obertisch nach dem Prinzip eines Verschiebebahnhofs mit Parkplätzen P1 bis P5. Die Bestückung unten erfolgt über einen Drehtisch auf einem Etagenschubladen-System.

Die Anlage 1 arbeitet zunächst in einem üblichen Arbeitsprozess.

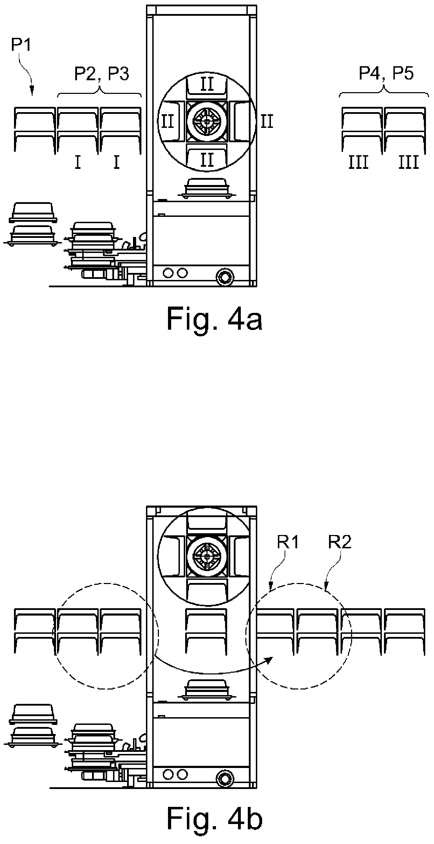

Sodann beginnt die Werkzeugwechselsequenz, dargestellt in den Figuren 4a bis 4g (der besseren Übersicht halber in den Figuren ohne die Schienen dargestellt):

Zunächst (vgl. Figur 4a) produziert die Anlage 1 im Automatikbetrieb.

Die Parkplatzposition P1 ist frei. Die vier Oberwerkzeuge eines ersten Werkzeugsatzes sind in den Positionen P2 und P3; die vier Oberwerkzeuge eines zweiten, gerade im Betriebsmodus befindlichen Werkzeugsatzes befinden sich im Oberwerkzeug-Revolver; die vier Oberwerkzeuge eines dritten Werkzeugsatzes befinden sich in den Parkplätzen P4 und P5.

Im nächsten Schritt (vgl. Figur 4b) wird die Anlage zum Werkzeugwechsel vorbereitet, um die Trägerteile für ein geändertes Kraftfahrzeug herstellen zu können.

Hierzu fährt zunächst der Rotationsobertisch mit dem Oberwerkzeug-Revolver nach oben, um dadurch Platz im Arbeitsraum 5 zu machen.

Durch den freigewordenen Arbeitsraum können nun über eine teleskopartig ergänzte Schiene alle Werkzeuge frei von der ersten Schiene 11 auf die zweite Schiene 12 gefahren werden.

Es werden nun die Werkzeugpakete von P2 und P3, also für den ersten Werkzeugsatz, durch den freigewordenen Arbeitsraum 5 hindurch von einer Seite zur anderen Seite verfahren, also zum dritten Werkzeugsatz. Im hier dargestellten Ausführungsbeispiel werden also die vier Werkzeuge des ersten Werkzeugsatzes von P2 und P3 von der ersten Schiene 11 an der Bedienseite 8 fortgefahren, hin zum dritten Werkzeugsatz, der auf P4 und P5 geparkt ist, und zwar auf die daneben liegenden freien Rangierplätze R1 und R2.

Die drei Parkplätze P1, P2, P3 an der Bedienseite 8 sind nun leer. Auf der gegenüberliegenden Seite, also zur Werkzeug-Wechselseite 13 hin, sind alle vier Plätze belegt, nämlich die beiden Rangierplätze R1, R2 und die beiden Parkplätze P4, P5.

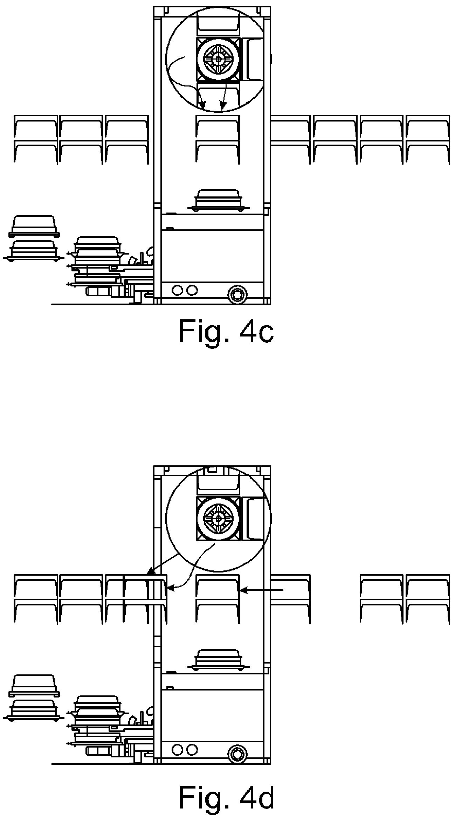

Im nächsten Schritt werden vom bislang im Oberwerkzeug-Revolver 6 getragenen Oberwerkzeugsatz zwei Oberwerkzeuge abgedockt, also auf die teleskopartige Verlängerung der Schiene gesetzt, und zwar übereinander (vgl. Figur 4c).

Die abgedockten Oberwerkzeuge werden nun auf einen freien Parkplatz P3 verschoben (Schritt von Figur 4c auf Figur 4d). Bevorzugt gleichzeitig werden zwei Werkzeuge des einzuwechselnden Werkzeugsatzes von der Rangierposition R1 in den Arbeitsraum 5 hineingefahren und am Oberwerkzeug-Revolver 6 angedockt.

Am Oberwerkzeug-Revolver befinden sich nun zwei Oberwerkzeuge des auszuwechselnden Werkzeugsatzes, also "noch angedockt", gemeinsam mit zwei "schon" angedockten Oberwerkzeugen des einzuwechselnden Werkzeugsatzes.

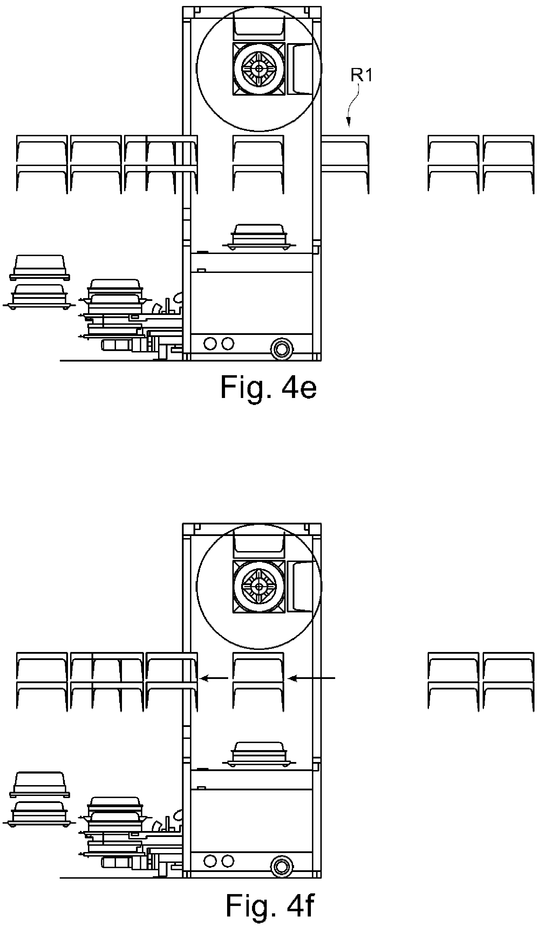

Im nächsten Schritt (vgl. Figur 4e) werden das dritte und das vierte Oberwerkzeug des auszuwechselnden Werkzeugsatzes abgedockt und auf die teleskopartig verlängerte Schiene im Arbeitsraum 5 abgesetzt (Zustand in Figur 4e: Es befinden sich nur noch die schon neu angedockten Oberwerkzeuge am Oberwerkzeug-Revolver 6, das dritte und das vierte abgedockte Werkzeug des abzudockenden Werkzeugsatzes befinden sich auf der Schiene gegenwärtig im Arbeitsraum 5).

Das dritte und das vierte Werkzeug des einzuwechselnden Werkzeugsatzes sind schon von der Rangierposition R2 auf die Rangierposition R1 vorgerückt.

Im nächsten Schritt (vgl. Figur 4f) werden das dritte und das vierte Oberwerkzeug des auszuwechselnden Werkzeugsatzes zur Bedienseite 8 hin verfahren, konkret auf den Parkplatz P3. Dabei werden die bereits vorher abgedockten Werkzeuge des auszuwechselnden Werkzeugsatzes von P3 auf P2 transportiert. Die vier auszuwechselnden - und nun bereits ausgewechselten - Oberwerkzeuge des auszuwechselnden Werkzeugsatzes befinden sich nun kompakt nebeneinander und jeweils zu zweit übereinander gestapelt auf den Parkplätzen P2, P3.

Gleichzeitig oder zumindest zum Teil überlappend in zeitlicher Hinsicht sind das dritte und das vierte Oberwerkzeug des einzuwechselnden Werkzeugsatzes von der Rangierposition R1 in den Arbeitsraum 5 verfahren und werden dort vom Oberwerkzeug-Revolver 6 angedockt (nicht mehr im Einzelnen dargestellt).

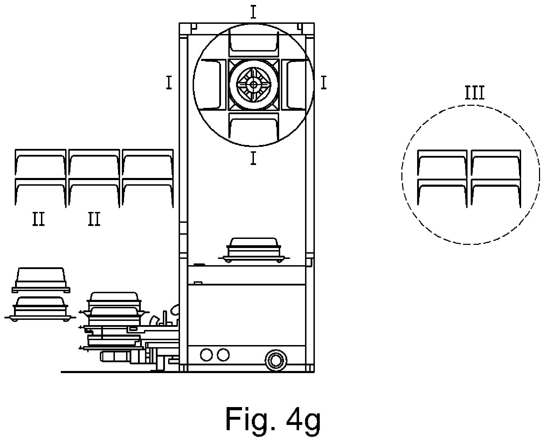

Wenn nun - optional - die vier Oberwerkzeuge des ausgewechselten Werkzeugsatzes von P2, P3 auf P1, P2 verfahren werden, dann ergibt sich die Konstellation wie in Figur 4g dargestellt: Der Werkzeugwechsel von einem Werkzeugsatz auf einen zweiten Werkzeugsatz ist abgeschlossen. Die Produktion mit dem zweiten Werkzeugsatz kann starten. Hierzu fährt einfach der Rotationsobertisch wieder aus der in Figur 4 dargestellten erhöhten Position in seine Arbeitshöhe hinunter.

Im dargestellten Ablauf sind die vier Oberwerkzeuge des dritten Werkzeugsatzes, geparkt auf den Parkplätzen P4, P5 auf der Werkzeug-Wechselseite 13, nicht zum Einsatz gekommen. Der Fachmann weiß aber, dass in analoger Weise zwischen allen Werkzeugsätzen gewechselt werden kann.

Die Parkplätze P4, P5 am Ende der Schiene auf der Werkzeugwechsel-Seite 13 dienen außerdem dazu, ein neu in die Anlage 1 einzubringendes Werkzeugset aufzunehmen.

Das gezeigte Ausführungsbeispiel zeigt eine Anlage mit einer Schnell-Werkzeugwechselfunktion mit integriertem Oberwerkzeugspeicher für bis zu drei Werkzeugsätze für verschiedene Fahrzeuge.

Die Oberwerkzeuge werden einmal gerüstet und verbleiben dann in der Anlage.

Die Unterwerkzeuge hingegen können per Werkzeugschnellwechsel aus einem Magazin bestück werden.

Dadurch wird erreicht, dass während der Produktion eines Kraftfahrzeugs keine Umspannungen am Oberwerkzeug vorgenommen werden müssen; Prototypenanlagen des Erfinders schaffen den Werkzeugwechsel von einem zu einem anderen Fahrzeugtyp innerhalb von weniger als sechs Minuten.

Zum Durchführen des Wechsels wird der Obertisch höher gesetzt. Zwischen dem Obertisch in oberer Position und dem Vorblaskasten wird quasi ein Verschiebebahnhof für Oberwerkzeuge eingesetzt.

Der Fachmann kann diese Anlage selbstverständlich leicht auf andere Einsatzbereiche anpassen, beispielsweise wenn eine größere oder kleinere Anzahl an Werkzeugsätzen für unterschiedliche Kraftfahrzeuge in der Anlage eingerüstet verbleiben sollen; und/oder wenn ein Werkzeugsatz mehr oder weniger Werkzeuge erfordert.

### Liste der verwendeten Bezugszeichen

- 1: Anlage
- 2: Kaule
- 3: Schutzbereich
- 4: Maschinengestell
- 5: Arbeitsraum
- 6: Oberwerkzeug-Revolver
- 7: Schaltachse
- 8: Bedienseite
- 9: Bedienerraum
- 10: Bediener
- 11: erste Schiene
- 12: zweite Schien
- 13: Werkzeug-Wechselseite
- 14: Werkzeug-Länge
- 15: Hubtisch
- P1-P5: Parkplätze
- R1-R2: Rangierplätze

## Patentansprüche

1. Anlage zum Aufkaschieren einer Kaschierfolie auf einen Trägerteilesatz zum Herstellen eines Innenverkleidungsteilesatzes für ein Kraftfahrzeug mittels eines Werkzeugsatzes,
wobei die Anlage eine Hubtischeinrichtung mit einem Oberjoch und einem Unterjoch aufweist, wobei das Oberjoch und das Unterjoch dazu eingerichtet sind, jeweils ein Oberwerkzeug bzw. ein Unterwerkzeug zur Benutzung aufzunehmen, also zum Zusammenfahren gegeneinander,
wobei ein Werkzeugsatz zwei Unterwerkzeuge und vier Oberwerkzeuge umfasst, nämlich
als Unterwerkzeuge zwei unterschiedliche Aufnahmeunterwerkzeuge zum Aufnehmen der Trägerteile sowie
als Oberwerkzeuge einerseits zwei unterschiedliche Kaschierhilfeoberwerkzeuge zum kaschierenden Zusammenwirken mit den Aufnahmeunterwerkzeugen und andererseits zwei unterschiedliche Trennoberwerkzeuge,
wobei die Anlage zur Aufnahme, also zum Benutzen bzw. Vorhalten und wahlweisen Wechseln, von mindestens zwei Werkzeugsätzen eingerichtet ist,
wobei am Oberjoch eine Werkzeugschalteinrichtung vorgesehen ist, welche die zwei Kaschierhilfeoberwerkzeuge und die zwei Trennoberwerkzeuge eines Werkzeugsatzes montiert haltend und wahlweise jedes dieser vier Oberwerkzeuge in eine Arbeitsposition und die anderen drei Oberwerkzeuge dabei in drei Nebenschaltpositionen zu schalten eingerichtet ist,
wobei am Oberjoch zusätzlich sowie auch am Unterjoch jeweils eine Werkzeugsatz-Wechseleinrichtung vorgesehen ist, um einen gerade benutzten Werkzeugsatz gegen einen vorgehaltenen Werkzeugsatz auszutauschen,
***dadurch gekennzeichnet, dass***
die obere Werkzeugsatz-Wechseleinrichtung mit einem Schienensystem und einem Antrieb in Wirkverbindung steht
und dazu eingerichtet ist, zum Wechseln des Werkzeugsatzes die vier benutzten Oberwerkzeuge eines benutzten Werkzeugsatzes auf das Schienensystem abzulegen
und im Austausch vier vorgehaltene Oberwerkzeuge eines vorgehaltenen Werkzeugsatzes von dort aufzunehmen.

2. Anlage nach Anspruch 1, ***dadurch gekennzeichnet, dass*** die Anlage am Oberjoch einen Revolver aufweist, der alle vier Oberwerkzeuge eines Werkzeugsatzes montiert zu halten und zu schalten eingerichtet ist.

3. Anlage nach einem der vorstehenden Ansprüche, ***dadurch gekennzeichnet, dass*** die Anlage am Oberjoch einen Revolver mit einer horizontalen Schaltachse aufweist.

4. Anlage nach einem der vorstehenden Ansprüche, ***dadurch gekennzeichnet, dass*** die Werkzeugsatz-Wechseleinrichtung am Oberjoch einen Schlitten aufweist.

5. Anlage nach Anspruch 4, ***dadurch gekennzeichnet, dass*** der Schlitten parallel zum Schienensystem verfahrbar gelagert ist.

6. Anlage nach Anspruch 5, ***dadurch gekennzeichnet, dass*** der Schlitten senkrecht zum Schienensystem verfahrbar ist.

7. Anlage nach einem der vorstehenden Ansprüche, ***dadurch gekennzeichnet, dass*** sich das Schienensystem zu zwei Seiten der Werkzeugschalteinrichtung am Oberjoch erstreckt und dort jeweils eine Schienenstrecke aufweist.

8. Anlage nach einem der vorstehenden Ansprüche, ***dadurch gekennzeichnet, dass*** die Werkzeugsatz-Wechseleinrichtung am Oberjoch einen aus einem Schienensystemtransferraum heraus verfahrbar gelagerten Schlitten aufweist, wobei der Schienensystemtransferraum zwischen zwei Schienenstrecken liegen kann.

9. Anlage nach einem der vorstehenden Ansprüche, ***dadurch gekennzeichnet, dass*** die Werkezugsatz-Wechseleinrichtung am Oberjoch dazu eingerichtet ist, zwei Oberwerkzeuge eines Werkzeugsatzes übereinander zu stapeln und gestapelt in das Schienensystem zu geben.

10. Anlage nach einem der vorstehenden Ansprüche, ***dadurch gekennzeichnet, dass***
die Werkzeugschalteinrichtung genau vier Benutzungsplätze für mittels Schalten benutzbare Oberwerkzeuge
und das Schienensystem genau vier Parkplätze zum Vorhalten von genau acht Oberwerkzeugen
und genau einen zusätzlichen Parkplatz zum Ablegen eines auszuwechselnden benutzten Oberwerkzeugs aufweisen.

11. Anlage nach einem der vorstehenden Ansprüche, ***dadurch gekennzeichnet, dass*** auf einer Bedienerseite der Anlage mehr Schienenstrecke vorgesehen ist als auf einer Rückseite.

12. Anlage nach einem der vorstehenden Ansprüche, ***dadurch gekennzeichnet, dass*** eine Schienenstrecke einen Antrieb aufweist, der auf die gesamte Länge der Schienenstrecke wirkt.

13. Anlage nach einem der vorstehenden Ansprüche, ***dadurch gekennzeichnet, dass*** das Schienensystem eine Teleskopschiene aufweist.

14. Anlage nach einem der vorstehenden Ansprüche, ***dadurch gekennzeichnet, dass*** am Unterjoch eine Unterwerkzeugschalteinrichtung für die zu benutzenden Unterwerkzeuge eines Werkzeugsatzes vorgesehen ist.

15. Anlage nach Anspruch 14, ***dadurch gekennzeichnet, dass*** die Unterwerkzeugschalteinrichtung einen Unterwerkzeugdrehtisch aufweist.

16. Anlage nach Anspruch 15, ***dadurch gekennzeichnet, dass*** der Unterwerkzeugdrehtisch eine vertikale Schaltachse aufweist.

17. Anlage nach einem der vorstehenden Ansprüche, ***dadurch gekennzeichnet, dass*** die Werkzeugsatzwechseleinrichtung am Unterjoch mit einem Stapelmagazin in Wirkverbindung steht, wobei vorgehaltene einzuwechselnde Unterwerkzeuge im Stapelmagazin vorgehalten werden können und wobei benutzte Unterwerkzeuge in das Stapelmagazin geparkt werden können.

18. Anlage nach Anspruch 17, ***dadurch gekennzeichnet, dass*** das Stapelmagazin Teleskopschubladen aufweist.

19. Verfahren zum Wechseln eines Werkzeugsatzes an einer Anlage zum Aufkaschieren einer Kaschierfolie auf einen Trägerteilesatz zum Herstellen eines Innenverkleidungsteilesatzes für ein Kraftfahrzeug mittels des Werkzeugsatzes,
wobei die Anlage eine Hubtischeinrichtung mit einem Oberjoch und einem Unterjoch aufweist, wobei das Oberjoch und das Unterjoch dazu eingerichtet sind, jeweils ein Oberwerkzeug bzw. ein Unterwerkzeug zur Benutzung aufzunehmen, also zum Zusammenfahren gegeneinander,
wobei ein Werkzeugsatz zwei Unterwerkzeuge und vier Oberwerkzeuge umfasst, nämlich
als Unterwerkzeuge zwei unterschiedliche Aufnahmeunterwerkzeuge zum Aufnehmen der Trägerteile sowie
als Oberwerkzeuge einerseits zwei unterschiedliche Kaschierhilfeoberwerkzeuge zum kaschierenden Zusammenwirken mit den Aufnahmeunterwerkzeugen und andererseits zwei unterschiedliche Trennoberwerkzeuge,
wobei die Anlage zur Aufnahme, also zum Benutzen bzw. Vorhalten und wahlweisen Wechseln, von mindestens zwei Werkzeugsätzen eingerichtet ist,
wobei am Oberjoch eine Werkzeugschalteinrichtung vorgesehen ist, welche die zwei Kaschierhilfeoberwerkzeuge und die zwei Trennoberwerkzeuge eines Werkzeugsatzes montiert haltend und wahlweise jedes dieser vier Oberwerkzeuge in eine Arbeitsposition und die anderen drei Oberwerkzeuge dabei in drei Nebenschaltpositionen zu schalten eingerichtet ist,
wobei am Oberjoch zusätzlich sowie auch am Unterjoch jeweils eine Werkzeugsatz-Wechseleinrichtung vorgesehen ist, um einen gerade benutzten Werkzeugsatz gegen einen vorgehaltenen Werkzeugsatz auszutauschen,
***dadurch gekennzeichnet, dass***
zunächst ein benutztes Oberwerkzeug von der Schalteinrichtung am Oberjoch auf einen freien Parkplatz in ein Schienensystem abgelegt wird,
danach die Oberwerkzeuge im Schienensystem verfahren werden,
und danach ein anderes Oberwerkzeug in die Werkzeugschalteinrichtung am Oberjoch übernommen wird.

20. Verfahren nach Anspruch 19, ***dadurch gekennzeichnet, dass*** als vorbereitender Schritt die Werkzeugschalteinrichtung verfahren wird, insbesondere in ihrer Höhe verstellt wird.

21. Verfahren nach Anspruch 19 oder 20, ***dadurch gekennzeichnet, dass*** Oberwerkzeuge entlang des Schienensystems verfahren werden, um der Werkzeugsatz-Wechseleinrichtung Zugriff auf einen freien Parkplatz zu ermöglichen.

22. Verfahren nach Anspruch 21, ***dadurch gekennzeichnet, dass*** ein benutztes Oberwerkzeug in das Schienensystem gelegt wird, und zwar auf den freien Parkplatz.

23. Verfahren nach Anspruch 22, ***dadurch gekennzeichnet, dass*** zwei Oberwerkzeuge auf den freien Parkplatz gelegt werden, nämlich bevorzugt ein Kaschierhilfeoberwerkzeug und das zugehörige Trennoberwerkzeug.

24. Verfahren nach einem der Ansprüche 19 bis 23, ***dadurch gekennzeichnet, dass*** das Legen des Oberwerkzeugs auf den freien Parkplatz dadurch erfolgt, dass das Oberwerkzeug zunächst von der Werkzeugschalteinrichtung abgedockt wird und dann seitlich auf den freien Parkplatz verschoben wird.

25. Verfahren nach einem der Ansprüche 19 bis 24, ***dadurch gekennzeichnet, dass*** das Übernehmen des einzuwechselnden Oberwerkzeugs in die Werkzeug-Schalteinrichtung dadurch erfolgt, dass das einzuwechselnde Oberwerkzeug zunächst innerhalb des Schienensystems in Position zum Andocken verfahren wird und dann an die Werkzeug-Schalteinrichtung angedockt wird.

26. Verfahren nach einem der Ansprüche 19 bis 25, ***dadurch gekennzeichnet, dass*** ein kompletter Werkzeugsatz mit vier Oberwerkzeugen zweistufig ausgewechselt und danach einen Produktionsbetrieb mit den neu eingewechselten Werkzeugen durchgeführt wird.

27. Anlage zum Aufkaschieren einer Kaschierfolie auf einen Trägerteilesatz zum Herstellen eines Innenverkleidungsteilesatzes für ein Kraftfahrzeug mittels eines Werkzeugsatzes,
wobei die Anlage eine Hubtischeinrichtung mit einem Oberjoch und einem Unterjoch aufweist, wobei das Oberjoch und das Unterjoch dazu eingerichtet sind, jeweils ein Oberwerkzeug bzw. ein Unterwerkzeug zur Benutzung aufzunehmen, also zum Zusammenfahren gegeneinander,
wobei am Oberjoch eine Werkzeugsatz-Wechseleinrichtung vorgesehen ist, um einen gerade benutzten Werkzeugsatz gegen einen vorgehaltenen Werkzeugsatz auszutauschen,
***insbesondere*** Anlage nach einem der Ansprüche 1 bis 18,
***dadurch gekennzeichnet, dass***
die obere Werkzeugsatz-Wechseleinrichtung mit einem Schienensystem und einem Antrieb in Wirkverbindung steht,
wobei das Schienensystem eine Teleskopschiene aufweist, welche dazu eingerichtet ist, in einen Arbeits- und Transferraum, insbesondere unterhalb einer Werkzeug-Schalteinrichtung, zum Werkzeugsatz-Wechsel hinein gefahren und zum Produktionsbetrieb der Anlage wieder heraus gefahren zu werden.
